# EUROPEAN PATENT APPLICATION

(11) **EP 2 650 832 A1**
(43) Date of publication of application: **16.10.2013**
(21) Application number: 13162145.0
(22) Date of filing: 03.04.2013
(51) Int. Cl.: G06Q 10/10, G06Q 50/00

(54) **Content-aware persistent user room**

(30) Priority: 06.04.2012 US 201213441581
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The disclosure relates to a method for providing a persistent virtual room by an online service, wherein said virtual room represents activities hosted by the online service. The method comprises the steps of automatically creating the virtual room in response to an activity being initiated by a user of the online service, said creating including linking the activity to the virtual room and associating the user with the virtual room as member of the virtual room, associating at least one further user with the virtual room as member of the virtual room in response to the at least one further user joining at least one activity represented by the virtual room, removing a member from the virtual room in response to the member leaving an activity represented by the virtual room, and persistently maintaining the virtual room during a predetermined period of time after the number of members of the virtual room has decreased below a threshold.

## Description

### TECHNICAL FIELD

The present disclosure relates to a method for providing a virtual room and to a respective online service. Moreover, the present disclosure relates to a virtual room which may be persistently maintained.

### BACKGROUND

Online services, such as social networks, online platforms, online systems, communication and networking sites, and other systems and interfaces, which may be accessible via a network by a plurality of users, often enable users to share online content and participate in online activities. For example, a user of a social network may upload online content and enable other users to retrieve respective data, such as audio or video files and images. In addition, a user may invite another user to a chat session hosted by the online service, for example, to discuss the uploaded online content. However, state of the art approaches typically terminate a respective session as soon as the activity has been finished, such that data related to the activity or session is typically lost. Also, state of the art approaches generally do not allow for a grouping of activities and online content, which are related to a dedicated group of users that are jointly participating in the activities and sharing the online content.

Also, chat rooms are known which are typically set-up by a provider and enable users to freely join and leave the chat room. In the chat room a user may communicate with other users. However, such chat rooms often require a relatively large amount of resources. Also, chat rooms have to be maintained by an administrator and it is difficult to decide when and if a chat room may be completely shut down.

In view of the above, one object is to improve communication and interaction capabilities of online services and to provide a flexible and structured way for a group of users to participate in activities involving online content, which may be easily set-up and automatically terminated without consuming a large amount of resources of the online service.

### SUMMARY

The problem is solved by a method for providing a virtual room within an online service and a virtual room as defined in the independent claims. Furthermore, a computer-readable medium and an online service providing a respective virtual room are defined. Preferred embodiments are defined in the dependent claims.

The inventive method according to the present disclosure for providing a virtual room by an online service, wherein said virtual room represents activities hosted by the online service, comprises the steps of automatically creating the virtual room in response to an activity being initiated by a user of the online service, said creating including linking the activity to the virtual room and associating the user with the virtual room as a member of the virtual room. At least one further user is associated with the virtual room as another member of the virtual room in response to the at least one further user joining at least one activity represented by the virtual room. Similarly, one of the members is removed from the virtual room in response to the member leaving an activity represented by the virtual room. Furthermore, the inventive method comprises the step of persistently maintaining the virtual room during a predetermined period of time after the number of members of the virtual room has decreased below a threshold.

The method, which preferably is a computer-implemented method, enables a group of users to interact and share activities. The virtual room is automatically created based on a single activity being initiated by a first user. The activity may involve a plurality of users, such as the first user and a second user. The first user may interact with the virtual room immediately after it has been created and may wait for the second user to join the activity. Both users and any subsequent user joining an activity of the virtual room are associated as members with the virtual room.

Subsequently, one or both users or any other member of the virtual room may leave the activity, however, the virtual room is persistently kept alive for a predetermined period of time even after the number of members has dropped below a threshold in order to preserve the data related to the virtual room. This may be of particular importance if, for example, a user unintentionally interrupts the activity, for example due to technical or handling errors. Such a user may return to the virtual room and resume the activity even if he/she was one of the last or the last member of the virtual room. Eventually, after the actual number of members of the virtual room has dropped below a certain predetermined limit and the time limit has expired, the virtual room may be automatically shut down and resources may be deallocated. For example, the threshold may be 1, meaning that the virtual room is kept alive during a predetermined period of time after the last member left the virtual room. Similarly, the threshold may be set to 2. In this case, the virtual room may be terminated if one user is left in the virtual room and no other users join one of the activities of the virtual room during a remaining period of time.

A member may be removed from the virtual room if she/he terminates participation in all or at least some activities represented by the virtual room. Hence, even though a member continues to participate in some of the activities of the virtual room, the member may be removed from the virtual room if she/he leaves a certain core activity, such as the initial activity of the virtual room or a maintenance process, which may be explicitly linked to the virtual room as an activity and in which all members automatically participate. If a member leaves the virtual room, his/her participation in the remaining activities may be terminated as well.

The method allows for a flexible processing, easy automatic creation of the virtual room, and persistent, yet controlled maintenance and shut down of the virtual room. It enables a plurality of users to meet and share activities without losing a connection to the other users. Furthermore, the virtual room does not require a complicated set-up or administration. Rather, the virtual room is automatically set-up whenever a user initiates an activity and shut down based on the number of members leaving the virtual room.

In a preferred embodiment, the virtual room is persistently maintained for a predetermined period of time if one member remains associated with the virtual room.

According to a particularly preferred embodiment, the virtual room is persistently maintained for a predetermined period of time after the last member has been removed from the virtual room. Hence, the virtual room is kept alive even without any member participating in the virtual room. Further conditions may be checked in order to determine a suitable point in time for an automatic shut down and the predetermined period of time may be adjusted as a function of such conditions. The online service may, for example, monitor the traffic associated with former members in order to determine potential communication errors, such as a broken or interrupted communication link between the online service and a client device of a former member. If the link is temporarily broken, the virtual room may be kept alive for a certain period of time in order to allow the former member to rejoin the virtual room. Also, the online system may persistently maintain an empty virtual room according to available processing resources. If processing resources are requested by other services or other virtual rooms of the online service, the online service may terminate the oldest empty virtual room persistently kept alive.

According to another embodiment, the method further comprises inviting one or more users of the online service to join an activity represented by the virtual room. The invitation may be automatically generated by the online service when the initial activity has been triggered by the initial user or first member. The user may also initiate the activity and subsequently invite other users to join the activity. Moreover, any other member of the virtual room may be allowed to generate such invitations.

In a preferred embodiment, the method further comprises initiating, by one of the members, a further activity and linking the further activity to the virtual room. Hence, members of a virtual room may initiate further activities with regard to the already created virtual room. In particular, at least some of the members of a virtual room participating in a first activity may agree on a further activity, which may be initiated by one of the members. For example, some participants of an online chat may jointly watch a live stream, initiate an online game session or collaboratively perform any other activity enabled by the online service. Therefore, the virtual room may host a plurality of activities, wherein all or subsets of the members of the virtual room may participate. Each member may join and leave any activity of the virtual room. Preferably, all, one or at least some of the members of the virtual room are automatically involved in the further activity.

In yet another preferred embodiment, the method further comprises linking, by one of the members, online content to the virtual room. The online content may be any kind of data or data stream enabled by the online service. A member may, for example, add a data file, such as an audio or video file, a respective stream, a still image or any other data to the virtual room, thereby sharing the online content with at least some of the members of the virtual room. The online content may be stored with reference to the virtual room and may be deleted after the virtual room has been eventually shut down. Alternatively, any online content linked to a virtual room may as well be linked to the user, who has provided the online content, and may be persistently stored even after the virtual room has been shut down. Similarly, a member may only be allowed to add online content to the virtual room which has already been previously uploaded by the user to the online service and stored in a personal area of the user.

Preferably, the method further comprises initiating a further activity related to the online content and linking the further activity to the virtual room in response to linking the online content to the virtual room. In particular, for each type of online content the online service may define one or more related activities. As soon as the online content is added to the virtual room the online service may determine a most suitable related activity and automatically link the activity to the virtual room. Any online content may be represented by a container storing content data and additional metadata specifying the type of activity or action. A container or seed for representing online content applicable in the method is, for example, described in the U.S. provisional application, serial no. 61/533,842, filed September 13, 2011, the entire content of which is incorporated herein by reference. Correspondingly, online content may represent data, data streams or signals that may be provided via the online service to users. In addition, online content may as well represent any functional or structural entities of the online service, such as any activities, users, or groups of users. For example, a member of the virtual room may add a video file to the virtual room, which may trigger a collective viewing of the video. Furthermore, a member may initiate an online game session by adding an online content representing the game session to the virtual room. Likewise, a member may invite a group of further users to join a chat within the virtual room by adding an online content representing the group of further users to the virtual room.

According to a preferred embodiment, said linking the online content includes dragging an item representing the online content and dropping the item on a representation of the virtual room. A suitable method for dragging online content to a virtual room applicable in the method is described in the U.S. provisional application, serial no. 61/595,619, filed February 6, 2012, the entire content of which is incorporated herein by reference.

Preferably, the linked online content is shared between at least some of the members of the virtual room. The member adding the online content to the virtual room may be provided with an interface enabling the member to select other members of the virtual room that may share the online content and are invited to participate in the related activity, if applicable.

In yet another embodiment, the method further comprises terminating at least one activity represented by the virtual room. An activity may be explicitly terminated by one of the members or by the first member of the virtual room. In addition or as an alternative, an activity of the virtual room may be automatically terminated by the online service after a certain period of time if nobody is participating in the activity.

According to a particularly preferred embodiment, an action of a member related to the virtual room includes checking permissions of the member to perform the action. The action may be any action enabled by the online service with regard to virtual rooms. For example, the action may comprise linking or adding activities to the virtual room, linking or adding online content to the virtual room, automatically initiating activities related to added online content, and terminating activities. The virtual room may be set-up such that only the first member or initial user is allowed to initiate and terminate activities or add online content to the virtual room. However, the virtual room may also be set-up to allow each member to perform a certain set of actions or any kind of action without restrictions.

Preferably, the permissions are set by the user. Hence, the initial user or first member may either initially set permissions for any subsequent member of the virtual room or may set the permissions on a case-by-case basis when a new user is associated with the virtual room, hence, whenever a new member enters the virtual room.

According to a particularly preferred embodiment, at least one activity represented by the virtual room is a chat or an online game session involving two or more users.

In yet another embodiment, the method further comprises creating a tracking structure including entries related to activities represented by the virtual room and adding an entry to the tracking structure in response to an update of one of the activities. The tracking structure may be created as soon as the virtual room is automatically created. Each entry of the tracking structure may comprise a time stamp, an indication of the respective activity, and a description of the update. For example, a new entry may be created for each new activity indicating the point in time of initiation of the activity, the activity ID or name, and a memo stating that the activity has been created. In addition, the tracking structure may comprise entries indicating new members and activities joined by the members as well as termination of activities. Furthermore, the tracking structure may comprise entries related to online content. Each member may be enabled to view and search the tracking structure in order to find activities, members and online content. In addition, the online service may process the data of the tracking structure and may provide for each member a filtered data structure based on current interactions and interests of the member.

In a particularly preferred embodiment, the online service is a social network.

According to another aspect of the present disclosure, a computer-readable medium includes instructions stored thereon, wherein said instructions, when installed and executed on a computing device, cause said computing device to automatically perform a method according to an embodiment of the present disclosure. In particular, the instructions may represent any processing steps according to one or more of the embodiments in any combination. The computing device may comprise a memory and a processor linked to the memory. The computing device may comprise means to access the medium and read the instructions from the medium. The instructions may be transferred to the memory of the computing device. In addition, the computing device may perform one or more installation steps in order to adapt the instructions to the particular computing device and to configure the computing device to execute the instructions. In particular, the computing device may already be configured to host an online service and the instructions may be installed as a module or component of the online service, such that the online service provides a virtual room, said virtual room representing activities hosted by the online service.

In response to the instructions, the online service may be further configured to automatically create the virtual room in response to an activity being initiated by a user of the online service, said creating including linking the activity to the virtual room and associating the user with the virtual room as member of the virtual room; to associate at least one further user with the virtual room as member of the virtual room in response to the at least one further user joining at least one activity represented by the virtual room; to remove a member from the virtual room in response to the member leaving an activity represented by the virtual room; and to persistently maintain the virtual room during a predetermined period of time after the number of members of the virtual room has decreased below a threshold.

According to another aspect of the present disclosure an online service for providing a virtual room for users is hosted on at least one server, said server comprising a memory storing instructions, and a processor connected to the memory and configured, in response to the instructions, to perform a method for providing a virtual room according to one or more embodiments of the disclosure in any combination.

Furthermore, a virtual room provided by an online service according to the present disclosure comprises an activity data structure representing activities hosted by the online service, and a member data structure representing users of the online service associated with the virtual room as members. The virtual room is automatically created in response to an activity being initiated by a user of the online service, such that the activity is linked to the virtual room by adding the activity to the activity data structure, and the user is associated with the virtual room as member of the virtual room by adding the user to the member data structure. The virtual room is further configured to add at least one further user to the member data structure in response to the at least one further user joining at least one activity represented by the activity data structure, and to remove a member from the member data structure in response to the member leaving an activity represented by the activity data structure. The virtual room is persistently maintained during a predetermined period of time after the number of members represented by the member data structure has decreased below a threshold.

The virtual room may be automatically created and is kept alive if members are participating in the activities of the virtual room. The virtual room may be automatically shut down, after the number of remaining members, such as one or two members or no member at all, has dropped below the predetermined or user-defined threshold. However, the virtual room and all related data and data structures are kept persistent for a period of time in order to enable a re-establishment of the virtual room. The virtual room and all related data are deallocated after the available time limit has expired.

Hence, the inventive virtual room enables a flexible processing, an easy set-up, persistent maintenance and shut down. It enables a plurality of users to easily meet and share activities, yet does not require a large amount of resources and time for administration.

The data structures, such as the activity data structure and the member data structure, may be represented as lists, arrays or any other data structure, suitable to hold pointers or other references to activities and users maintained by the online service.

According to a particularly preferred embodiment, the virtual room is persistently maintained for a predetermined period of time if one member remains represented by the member data structure.

According to another embodiment, the virtual room is persistently maintained for a predetermined period of time after the last member has been removed from the member data structure.

According to a particularly preferred embodiment, a further activity initiated by one of the members is added to the activity data structure.

According to another aspect, the virtual room further comprises an online content data structure representing online content linked to the virtual room by one of the members.

In yet another preferred embodiment, a further activity related to the online content is added to the activity data structure in response to adding the online content to the online content data structure.

In a further embodiment, the virtual room further comprises means for enabling dropping of an item representing the online content, wherein the online content is added to the online content data structure in response to dropping the item on said means.

According to a preferred embodiment, the virtual room further comprises a security data structure representing permissions of members to perform actions related to the virtual room.

Preferably, at least one activity represented by the activity data structure is a chat or an online game session involving two or more users.

In a preferred embodiment, the virtual room further comprises a tracking structure including entries related to activities represented by the activity data structure, wherein an entry is added to the tracking structure in response to an update of at least one of the activities.

### BRIEF DESCRIPTION OF THE DRAWINGS

The specific features, aspects and advantages of the present disclosure will be better understood with regard to the following description and accompanying drawings where:
- Fig. 1: shows schematic representation of an input interface enabling creation of a virtual room according to an embodiment;
- Fig. 2: shows an interface of a representation of a virtual room according to an embodiment;
- Fig. 3: shows another interface enabling linking of online content to a virtual room according to an embodiment;
- Fig. 4: shows an initiation of an activity related to online content linked to a virtual room according to an embodiment; and
- Fig. 5: shows a schematic illustration of a system according to an embodiment of the present disclosure.

### DETAILED DESCRIPTION

In the following description of preferred embodiments, reference is made to the drawings which show by way of illustration specific embodiments. It is to be understood that the embodiments may include changes in design and structure without departing from the scope of the present invention as defined in the claims.

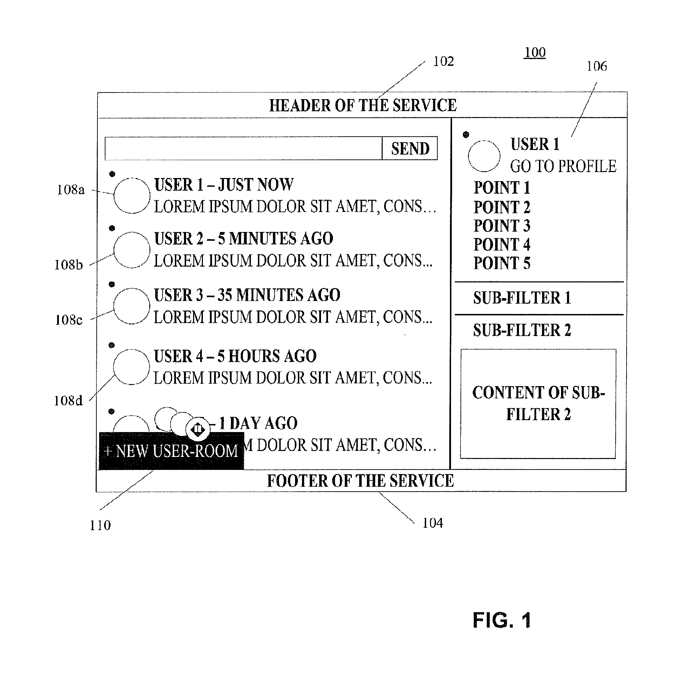

Fig. 1 shows a schematic representation of an interface enabling creation of a virtual room according to an embodiment. The interface 100 is presented as a page of a social network or any other online service or platform, which is personalized to a particular user, such as "User 1". The page may comprise a header 102 and footer 104 providing information related to a service of the social network currently used by the user. Furthermore, section 106 of the page may comprise information about the user, providing a username and other identification, such as an image of the user, and various further services of the user, such filters for content. The interface 100 shows a plurality of items 108a, 108b, 108c, 108d representing seeds storing online content, which is related or linked to the user. The items 108a, 108b, 108c, 108d may represent online content, such as data files or streams, as well as other users or groups of users of the social network, and activities hosted by the social network. The items 108a, 108b, 108c, 108d may indicate the respective user associated with the content or activity, a time stamp, and a description or comment, which may be provided by the respective user or automatically generated by the social network. For example, the item 108a may be related to the user and items 108b, 108c, and 108d may be related to other users of the social network, such as "User 2," "User 3," and "User 4," respectively.

The interface 100 further shows an interactive element 110 that can be used by the user to initiate creation of a persistent virtual room or user room. Throughout this description, the terms virtual room and user room are used interchangeably to refer to a virtual room provided by an online service according to an embodiment of the present invention. The user may, for example, drag and drop an icon of another user, such as one of the items 108b, 108c, and 108d, into the interactive element 110 in order to initiate an activity with the other user and to start the persistent user room. Similarly, the user could drag an item representing a group of users and drop the item into the interactive element 110 to initiate an activity between the users of the group in the user room. The user room will be automatically created by the social network and the user will be associated with the user room as a member of the user room. As a result, at least two or more users will join in a group together in a user room. The initiated activity may be a text chat or any other suitable collaborative activity. For example, the user may drag and drop an item representing a video chat into the interactive element 110, which will automatically create the user room. Subsequently, the user may invite other users to joint the video chat.

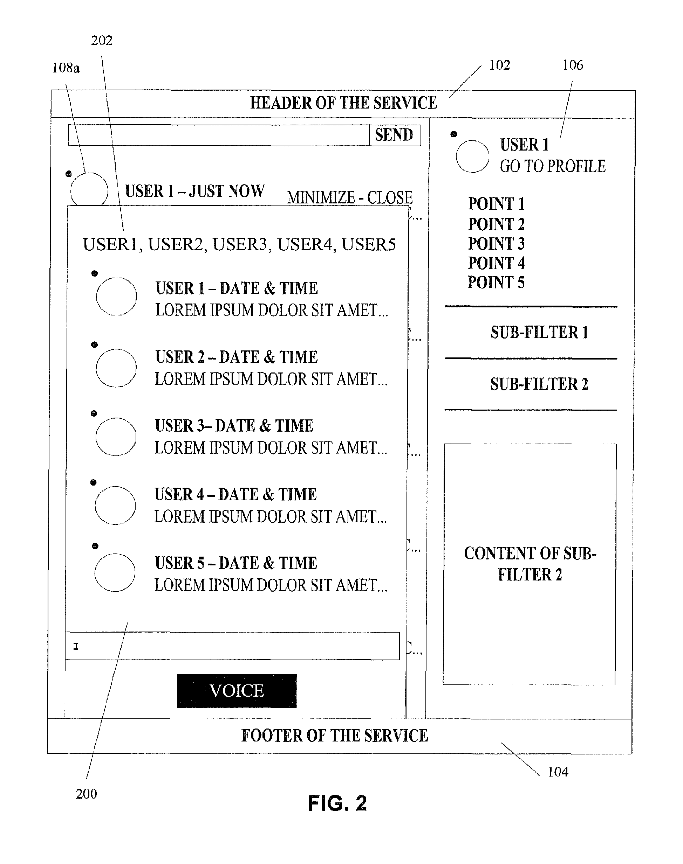

Fig. 2 shows an interface of a representation of a virtual room according to a preferred embodiment. The representation 200 may be arranged in front of a personalized page of a user of a social network, such as the interface 100 depicted in Fig. 1. Therefore, same or similar parts of Fig. 2 have been designated with the same reference signs as in Fig. 1.

After the persistent virtual room has been created, a personalized representation 200 may be created for each member, even though only one entity of the user room is maintained by the social network. The representation 200 may show all members of the user room, for example as a list 202 of names of members or icons of members. Additionally or as an alternative, the representation 200 of the persistent user room may include a chat window or a video chat window on top of all other connected users, and a text message window. A main body of the window may be used for display of messages of other users and may also include input elements enabling the user to create and send messages to members of the virtual room. Furthermore, the personalized representation 200 may show additional data of the user like profile information.

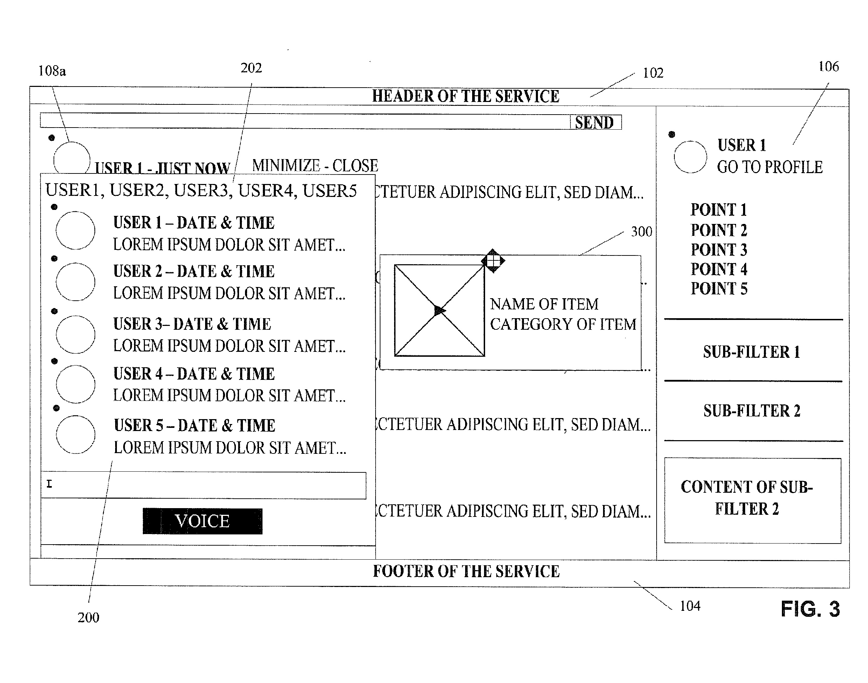

Fig. 3 shows another interface enabling linking of online content to a virtual room according to an embodiment. Similar to the interface 100 of Fig. 1 and the representation 200 of Fig. 2, the interface 300 may be represented as a personalized page of a user of a social network combined with a representation of a user room. Therefore, same or similar parts of Fig. 3 have been designated with the same reference signs as in Figs. 1 and 2.

The members of the virtual room may drag content 300 into the persistent virtual room, such as a video content, social media, or a playable content. The content 300 may be dragged by the user from a touchpoint within the personalized page of the user and dropped anywhere into the representation 200 of the virtual room, for example into the chat area. Each member of the virtual room may be allowed to add content to the virtual room using a respective representation of the virtual room presented to the particular member. However, the user who has created the virtual room by initiating the activity may as well set room permissions in order to limit the actions of the members of the group.

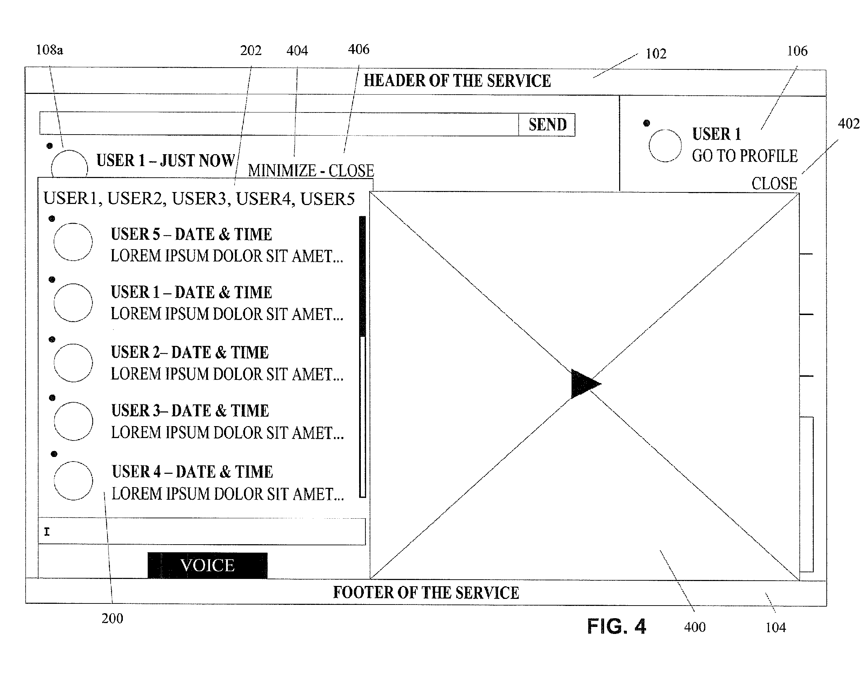

After dropping the content 300 into the virtual room, the content 300 may be shared between all members of the virtual room. However, the content 300 may as well be related to an activity, which may be automatically invoked after the content 300 has been linked to the virtual room. Fig. 4 shows such an initiation of an activity related to online content linked to a virtual room according to a preferred embodiment. The initiation may be performed in an environment similar to the personalized page and representation of a virtual room as shown in Fig. 3. Therefore, same or similar parts of Fig. 4 have been designated with the same reference signs as in Fig. 3.

Fig. 4 shows the presentation of online content to a member of the virtual room. Same or similar presentations for the other members of the virtual room using their personalized representation of the virtual room enable a collaborative experience of the online content. As soon as the presentation has been invoked, either by directly initiating the activity by one of the members or by adding an online content to the persistent room, the content may be shown to each particular member of the virtual room through an output interface, such as a window 400 used to present the online content to a user. For each member, the content may be provided live or asynchronously. For example, video content may be added to the persistent virtual room, as shown in Fig. 3, and thereafter, the video content may be provided to all members using respective windows 400.

The window 400 may be attached to the representation 200 of the virtual room. The attached window 400 providing the video data as well as any other attached content, such as embedded social media and playable content may be closed separately from the virtual room using an interactive element 402. By closing the window 400, the user may terminate the respective activity. In addition, the user may minimize the representation 200 of the persistent virtual room using an interactive element 404. Preferably, any changes of the representation 200, such as via interactive element 404, or leaving of activities, such as via interactive element 402, will not influence the experience of other members of the virtual room.

If a user closes the virtual room on his side, for example, via an interactive element 406, or if the user terminates all activities of the virtual room, he will be removed from the virtual room. However, the virtual room will not be shut down for the remaining members. Even the last leaving member of the virtual room may close the room leaving the virtual room empty without terminating the virtual room. Rather, as discussed above, the virtual room will be kept alive for a certain period of time. During this time period, former members may rejoin and reactivate the virtual room. Since the virtual room and the activities related to the virtual room are persistent, the current user may scroll through the history of the room, for example using a scroll bar 408.

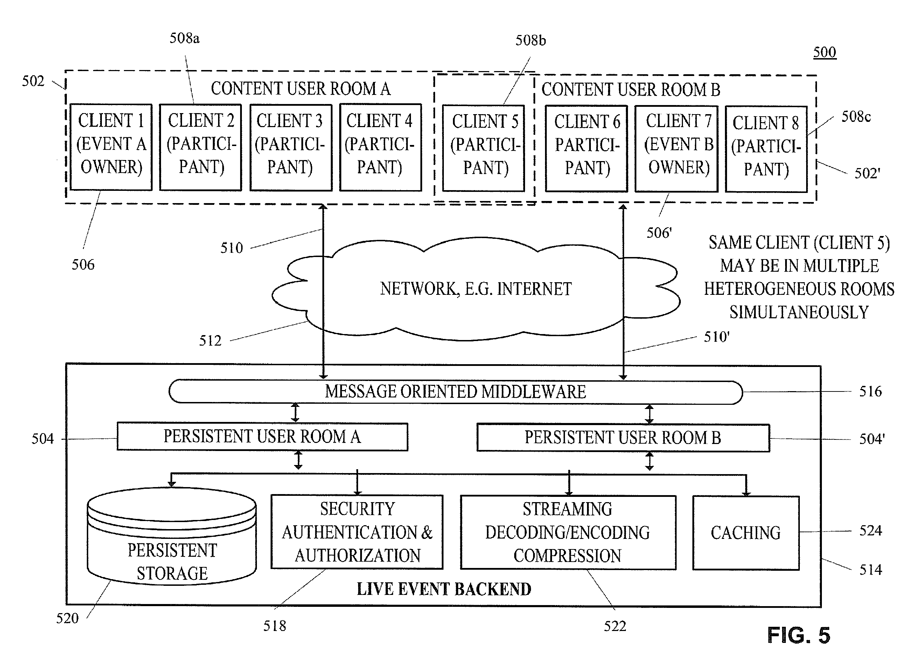

Fig. 5 shows a schematic illustration of a system hosting an online service according to an embodiment of the present disclosure, detailing management and organisation of a plurality of virtual rooms utilized by users of the online service. The system 500 may handle multiple virtual room sessions separately, whenever multiple virtual rooms are created at the same time or at overlapping times.

A virtual room may be represented by a transient virtual room 502, 502' on a client side as well as corresponding persistent virtual rooms 504, 504' on a server side of the system 500. In particular, the system 500 may host a first virtual room A, which may be represented as the transient virtual room A 502 on the client side and the persistent virtual room B 504 on the server side. A client device 506, such as "Client 1," may be operated by a user (not shown). The user may initiate an activity, such as "Event A," via client 506 and thereby trigger an automatic creation of the virtual room A. The client 506 will become the first member of the virtual room A and may therefore be denoted as an owner of the virtual room A. The owner of the virtual room A may have special permissions with regard to interaction with the virtual room A and may control participation of other users operating client devices 508a ... 508b, denoted as "Client 2," "Client 3," "Client 4," and "Client 5." For example, the activity initiated via client device 506 may trigger an invitation directed to users of client devices 508a ... 508b to participate in this activity. After joining the invitation, users operating clients 508a ... 508b may be associated with the virtual room as members. All members "Client 1" to "Client 5" may interact with the virtual room A using one or more communication channels 510 provided via a network 512. Further processing of the virtual room and interfaces provided to users by the online service may correspond to the processing described above with regard to Figs. 1 to 4.

In addition, system 500 may host a second virtual room B, which may be represented as the transient virtual room B 502' on the client side and the persistent virtual room B 504' on the server side. The transient virtual room B 502' may define an owner of virtual room B as well as a group of further users participating in and interacting with the virtual room B. For example, the owner of virtual room B may be a user operating client device 506', denoted as "Client 7," and further users operating client devices 508b ... 508c, such as "Client 5," "Client 6," and "Client 8," may interact and participate with the virtual room B via communication channels 510', which may also be provided via the network 512, even though different networks may also be used. Similarly, some of the clients may use network 512 and other clients may use a different network in order to participate in one of the virtual rooms.

The groups of members of virtual rooms A and B may comprise different users. However, the groups of members need not to be disjoint, such that one client device may be associated with two or more virtual rooms. For example, client device 508b may at the same time be associated with both, virtual room A and virtual room B.

Even though a certain number of client devices is shown as members of virtual rooms A and B, it is to be understood that the present invention is not restricted to a particular number of virtual rooms, users, members or respective client devices. Rather, any number of members may participate in any number of virtual rooms and the particular system set-up may only be limited by available processing resources. For example, a virtual room may be created by a first user and a second user may join the virtual room to participate in the initial activity, such as collectively watching a video stream or enjoying an online game session together. Further users may be invited and may join the virtual room. Yet, it is to be understood that the virtual room may be created with one user as member only. Also, the virtual room may remain persistent for a certain period of time even after the last user has left the virtual room and, therefore, a persistent user room without any member may exist at least for a certain duration of time.

Communication between one of the clients 506, 506', 508a ... 508c and the system may be directed via one of the communication channels 510, 510' of the network 512 to a backend 514 of the system 500. The incoming data, such as data packets, may first be handled by a message-oriented middleware 516 on the backend 514, where it may be passed to the corresponding persistent virtual room 504, 504' and further provided to subsequent layers of the system, including a security component 518 for authentication and authorization, storage via a persistent storage 520, streaming by a streaming component 522, and buffering by a caching device 524. Responses of components of the subsequent layers may either be processed by the persistent user rooms 504, 504' and passed to the respective clients via the message-oriented middleware 516, or may use additional communication channels (not shown) to provide respective data directly to the clients. For example, security component 518 may establish a dedicated channel to a client device in order to authenticate the user operating the client device. Similarly, streaming component 522 may set up dedicated streams of data content for each member of a virtual room.

The groups of members of virtual rooms A and B may comprise different users. However, the members of a virtual room need not to be disjoint, such that one client device may be associated with two or more virtual rooms. Hence, client device 508b may at the same time be associated with both virtual room A and virtual room B. In this case, based on the utilized transient virtual room 502, 502', the message-oriented middleware 516 may filter and route all communication of client 508b towards the respective persistent virtual room 504, 504'. Beside the message-oriented middleware 516 the system may also use the services of subsequent layers of the system 500, which may, for example, be provided by the security component 518, the persistent storage 520, the streaming component 522 and the caching device 524, in order to process communication related to any of the virtual rooms A and B. In particular, the use of a message-oriented middleware 516 in combination with services of subsequent layers for a plurality of virtual rooms being used by possibly overlapping groups of users greatly simplifies the organization and management of the virtual rooms and enables a flexible and direct participation in activities represented by virtual rooms.

The network 512 preferably enables a full-duplex communication, for example, via TCP, UDP, WebSockets, RTSP and others. For example, the network 512 may be the Internet. However, it is to be understood that the present invention is not limited by a certain type, topology or configuration of a network. Furthermore, the persistent storage 520 may be any type of suitable storage, such as a memory unit, a local, remote or distributed database or another kind of storage device capable of storing online content in a persistent way. Also, the security component 518 may allow for authentication and authorization of users operating client devices, using any suitable authentication and authorization mechanism. Furthermore, it is to be understood that the subsequent layers of the backend 514 may be extended with additional services, modules and components, for example, services related to user management.

While preferred embodiments have been described in many details, it has to be understood that aspects of the invention can take many forms and that many modifications may be provided to the embodiments without leaving the scope of the invention. For example, particular processing steps, data structures, interfaces, and structural characteristics may be modified, added and omitted without leaving the scope of the present invention. Similarly, processing steps of embodiments may be performed according to an altered order and structural elements may be arranged differently from the examples described. The embodiments shown herein are intended to illustrate rather than to limit the invention as defined by the claims. The invention may be practiced within the scope of the claims differently from the examples described and the described features and characteristics may be of importance for the invention in any combination.

## Claims

1. A method for providing a virtual room by an online service, said virtual room representing activities hosted by the online service, comprising the steps of:
automatically creating the virtual room in response to an activity being initiated by a user of the online service, said creating including linking the activity to the virtual room and associating the user with the virtual room as member of the virtual room;
associating at least one further user with the virtual room as member of the virtual room in response to the at least one further user joining at least one activity represented by the virtual room;
removing a member from the virtual room in response to the member leaving an activity represented by the virtual room; and
persistently maintaining the virtual room during a predetermined period of time after the number of members of the virtual room has decreased below a threshold.

2. The method of claim 1, wherein the virtual room is persistently maintained for a predetermined period of time if one member remains associated with the virtual room.

3. The method of claim 1 or 2, wherein the virtual room is persistently maintained for a predetermined period of time after the last member has been removed from the virtual room.

4. The method according to one of the preceding claims, further comprising at least one of inviting one or more users of the online service to join an activity represented by the virtual room, and initiating, by one of the members, a further activity and linking the further activity to the virtual room, wherein at least some of the members of the virtual room are automatically involved in the further activity.

5. The method according to one of the preceding claims, further comprising linking, by one of the members, online content to the virtual room, wherein the linked online content is shared between at least some of the members of the virtual room.

6. The method of claim 5, further comprising initiating a further activity related to the online content and linking the further activity to the virtual room in response to linking the online content to the virtual room.

7. The method according to one of the preceding claims, wherein an action of a member related to the virtual room includes checking permissions of the member to perform the action, wherein the permissions are preferably set by the user.

8. The method according to one of the preceding claims, wherein the online service is a social network and at least one activity represented by the virtual room is a chat or an online game session involving two or more users.

9. An online service for providing a virtual room for users of the online service, said online service being hosted on at least one server comprising:
a memory storing instructions; and
a processor connected to the memory and configured, in response to the instructions, to perform a method for providing a virtual room according to one of the preceding claims.

10. A computer-readable medium having instructions stored thereon, wherein said instructions, when executed on a computing device, cause said computing device to automatically perform a method according to one of the claims 1 to 8 for providing a virtual room by an online service implemented on the computing device.

11. A virtual room provided by an online service, comprising:
an activity data structure representing activities hosted by the online service; and
a member data structure representing users of the online service associated with the virtual room as members,
wherein the virtual room is automatically created in response to an activity being initiated by a user of the online service, such that the activity is linked to the virtual room by adding the activity to the activity data structure, and the user is associated with the virtual room as member of the virtual room by adding the user to the member data structure,
wherein the virtual room is further configured to add at least one further user to the member data structure in response to the at least one further user joining at least one activity represented by the activity data structure, and to remove a member from the member data structure in response to the member leaving an activity represented by the activity data structure,
wherein the virtual room is persistently maintained during a predetermined period of time after the number of members represented by the member data structure has decreased below a threshold.

12. The virtual room of claim 11, wherein the virtual room is persistently maintained for a predetermined period of time if one member remains represented by the member data structure.

13. The virtual room of claim 11 or 12, wherein the virtual room is persistently maintained for a predetermined period of time after the last member has been removed from the member data structure.

14. The virtual room according to one of the claims 11 to 13, wherein a further activity initiated by one of the members is added to the activity data structure, the virtual room further comprising an online content data structure representing online content linked to the virtual room by one of the members, wherein a further activity related to the online content is added to the activity data structure in response to adding the online content to the online content data structure.

15. The virtual room according to one of the claims 11 to 14, further comprising one or more of a security data structure representing permissions of members to perform actions related to the virtual room, and a tracking structure including entries related to activities represented by the activity data structure, wherein an entry is added to the tracking structure in response to an update of at least one of the activities.
